# EUROPEAN PATENT APPLICATION

(11) **EP 1 053 855 A1**
(43) Date of publication of application: **22.11.2000**
(21) Application number: 00102746.5
(22) Date of filing: 10.02.2000
(51) Int. Cl.: B29C 49/00, B29C 49/48, B29C 51/10, B29C 51/08, B29L 9/00, B29L 31/30, B29L 31/58

(54) **Apparatus and method for moulding articles of thermoplastic material**

(30) Priority: 21.05.1999 IT TO990431
(71) Applicant: CRS Srl Centro Ricerche e Sperimentazioni, 10060 Frossasco (IT)
(72) Inventor: Cesano, Franco, 10060 San Secondo di Pinerolo (IT)
(74) Representative: Marchitelli, Mauro

(57) **Abstract**

Apparatus for moulding articles of thermoplastic material, comprising:
- a first and a second die (22, 40) movable towards each other along a closure direction (B),
- at least one slider (24) movable along a direction (A) orthogonal to said closure direction (B),
- means (38) for applying a jet of pressurized fluid between the two sheets of thermoplastic material (S', S'') positioned between said dies (22, 40), in which the slider (24) and at least one of said dies (40) have moulding surfaces (30, 32, 44) against which, in use, portions of said sheets (S', S'') are compressed by said jet of pressurized fluid, and wherein the slider (24) and one of said dies (22) have respective compression moulding surfaces (26, 28) arranged so as to mould a portion (12) of at least one of said sheets (S', S'') as a consequence of the movement of the slider (24) from an open position to a closed position.

## Description

The present invention relates to apparatus for moulding articles of thermoplastic material, in particular for manufacturing articles for internal fittings of vehicles.

WO-A-95/28271 discloses an apparatus for producing a component formed by two sheets of thermoplastic material, having the features contained in the preamble of the indipendent claims.

The object of the present invention is to provide an apparatus of the type disclosed in such document, which permits to produce articles with a more complex shape, comprising for instance three walls of thermoplastic material in one cross-sectional plane.

In accordance with the present invention, this object is achieved by an apparatus having the features forming the subject of the main claim.

The present invention will now be disclosed in detail with reference to the attached drawings, given purely by way of non-limiting example, in which:
- figures 1 and 2 are schematic cross-sections of the lower part of a moulding equipment according to the invention, in an open and closed position, respectively,
- figure 3 is a schematic cross-section of an apparatus according to the invention in an intermediate step of the operation,
- figure 4 is a schematic cross-section of the moulding equipment at the end of the moulding process, and
- figure 5 is a schematic perspective view of a component obtained by means of the apparatus according to the invention.

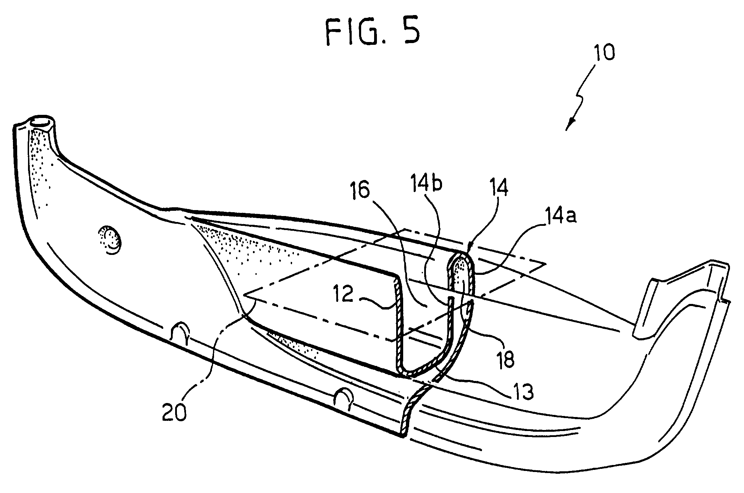

Referring initially to figure 5, the numeral reference 10 indicates a component of thermoplastic material which is used for internal fitting of vehicle doors. The component 10 forms a rigid pocket intended to be applied on the lower part of an inner panel or to be integrated in a panel applied on the inner part of a door. The component 10 has an internal wall 12, a bottom wall 13 and an outer wall 14 which define an upwardly open space 16 with a substantially U-shaped cross-section, forming a seat for containing various objects, such as gloves, maps, tools or the like. The outer wall 14 of the component is in its turn formed by an outer layer 14a having an aesthetic coating and by an inner layer 14b. A cavity 18 is defined between the layers 14a and 14b.

With the existing moulding equipment, a component with a shape of this type cannot be manufactured in a monolithic form, because it has three walls in the same cross-sectional plane, for instance the one indicated at 20 in figure 5. In the following there will be disclosed the steps of a moulding method which allows the component 10 to be produced in a monolithic form. Although the present description has been made with specific reference to a component intended to form an door pocket, it is understood that the present invention can be used for manufacturing any component with a complex shape, including for instance three walls of thermoplastic material in the same cross-sectional plane.

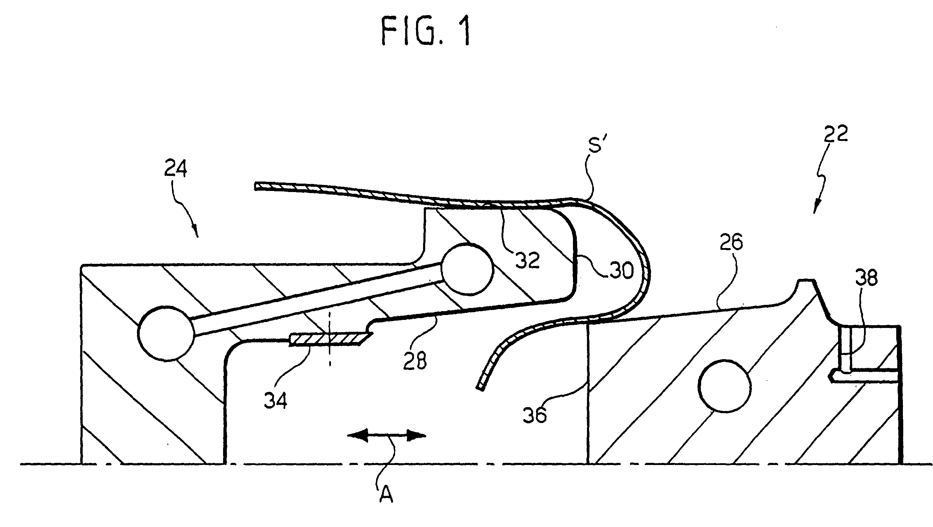

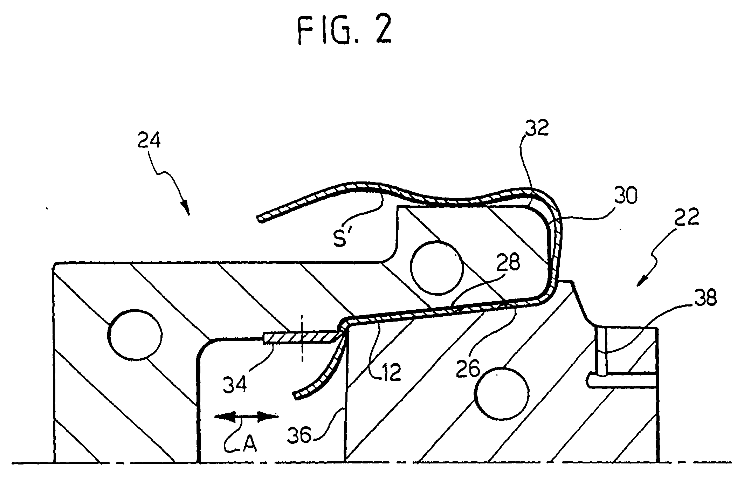

Referring now to figures 1 and 2, the numeral reference 22 indicates a lower die of an equipment for manufacturing the component 10. The lower die 22 is associated with a first slider 24 which is movable in the direction indicated by the doable arrow A in figures 1 and 2 between the open position shown in figure 1 and the closed position shown in figure 2. The lower die 22 and the slider 24 have respective surfaces 26, 28 for thermo-compression moulding the inner wall 12 of the component 10. The first slider 24 has blow moulding surfaces 30 and 32 intended to form respectively the bottom wall 13 and the internal portion 14b of the outer wall 14. The first slider 24 has also a cutting blade 34 which is intended to cooperate with a wall 36 of the lower die 22 for cutting the surplus portion of the sheet of thermoplastic material. The lower die 22 has a channel 38 for feeding a jet of compressed fluid intended to blow mould the parts of the component which, because of the geometry of the piece to be produced, cannot be obtained by a compressing them between co-operating moulding surfaces.

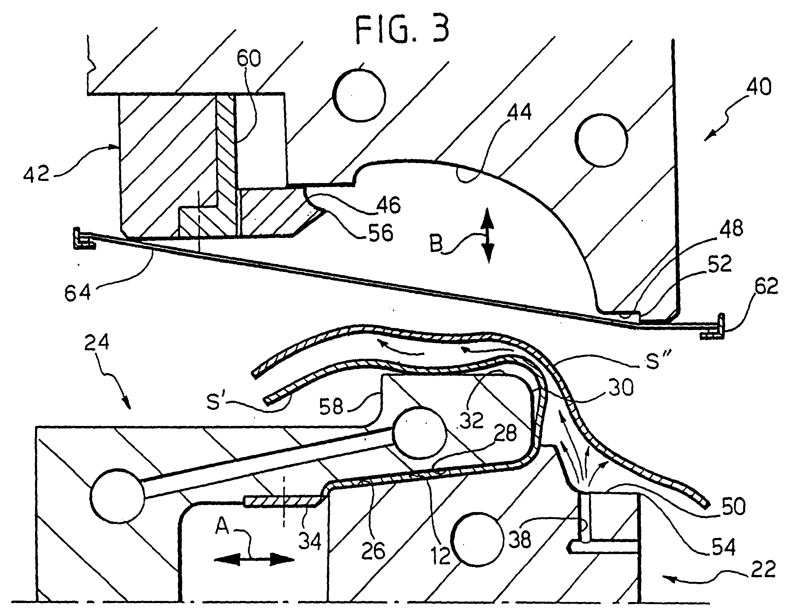

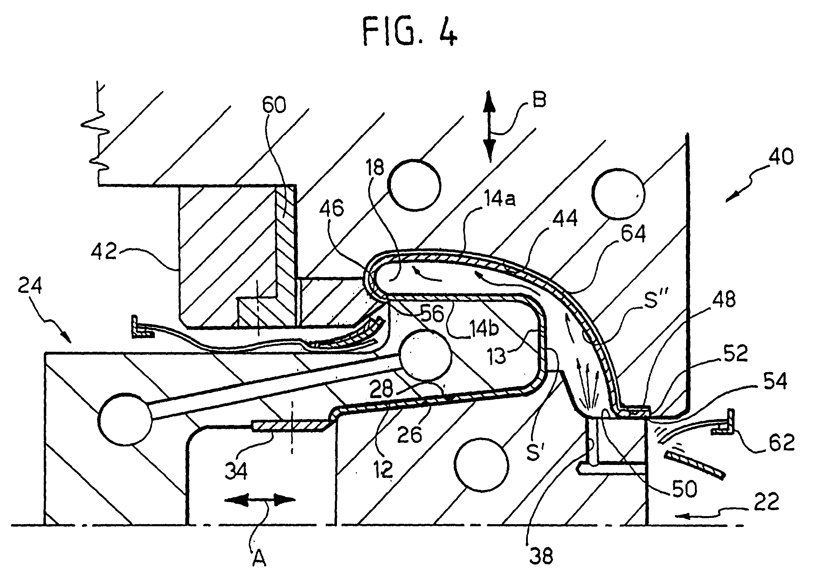

Referring now to figures 3 and 4, the apparatus according to the present invention comprises also an upper die 40 which is movable with respect to the lower die 22 in the direction indicated by the double arrow B, between the open position shown in figure 3 and the closed position shown in figure 4. The upper die 40 carries a second slider 42 which is movable with respect to the upper die 40 in a direction orthogonal to the closure direction B. The upper die 40 and the second slider 42 have respective surfaces 44, 46 for blow moulding respective portions of a sheet of thermoplastic material. The upper die 40 has also a surface 48 intended to co-operate with a corresponding surface 50 of the lower die 22 for carrying out a compression moulding of a corresponding sheet portion. The dies 40 and 22 have respective edges 52, 54 intended to cut surplus portions of material. The moulding surface 46 of the second slider 42 terminates with an edge 56 which is intended to cut the surplus portions of material against a surface 58 of the first slider 24. A calibrated stop element 60 enables the distance between the edge 56 and the surface 58 to be adjusted so that, in the closed position shown in figure 4, the edge 56 is sufficiently close to the surface 58 so as to carry out the cut even if the edge does not contact the surface 58, for preventing a too fast wear of the cutting edge 56.

The upper die 40 carries also a frame 62 on which there is stretched a layer 64 of coating material intended to be applied on the visible outer surface of the finished component.

The moulding cycle provides for placing a first sheet S' heated at a plasticizing temperature on the first slider 24 while this is in its open configuration (figure 1). Then, the first slider 24 is brought in its closed configuration, as shown in figure 2. After the movement of the first slider 24, the surfaces 26 and 28 carry out a compression moulding of the corresponding portion of the first sheet S'. At the same time the blade 34 cuts the lower surplus portion of the sheet S'.

Then, a second sheet S'', previously heated at a plasticizing temperature, is placed above the first sheet S'. A jet of compressed air at low pressure coming from a piping 38 prevents the second sheet S'' from adhering to the first sheet S' (figure 3).

Finally, the upper die 40 is lowered and the second slider 42 is brought in its closed position. At the same time, a jet of compressed air at high pressure is supplied by the nozzle 38 so as to force the free portions of the sheets S' and S'' against the blow moulding surfaces 30, 32, 44 and 46. As shown in figure 4, the jet of compressed air carries out the blow moulding of the bottom wall 13 and of the walls 14a and 14b, including the connecting portion therebetween. The coating layer 64 is applied on the outer surface of the wall 14a and on the connecting portion between the surfaces 14a and 14b. The cutting edge 56 of the second slider 42 cuts the coating layer 64 and the sheets S' and S'' in correspondence with the joining zone between the two sheets S' and S''. The edges 52 and 54 compenetrate with each other and cut the coating layer 64 and the second sheet S''. In addition, the surfaces 48 and 50 carry out a compression moulding of the corresponding portions of the sheet S''. As shown in figure 4, the jet of compressed air forms the cavity 18 between the walls 14a and 14b in a simple and efficient way without the need to use movable components for carrying out the compression moulding of the sheets in the zone corresponding to the cavity.

## Claims

1. Apparatus for moulding articles of thermoplastic material, comprising:
- a first and a second die (22, 40) movable towards each other along a closure direction (B),
- at least one slider (24) movable along a direction (A) orthogonal to said closure direction (B),
- means (38) for feeding a jet of pressurized fluid between the two sheets of thermoplastic material (S', S'') positioned between said dies (22, 40),
wherein the slider (24) and at least one of said dies (40) have moulding surfaces (30, 32, 44) against which, in use, portions of said sheets (S', S'') are compressed by said jet of pressurized fluid,
characterised in that the slider (24) and one of said dies (22) have respective compression moulding surfaces (26, 28) arranged so as to mould a portion of at least one of said sheets (S', S'') as a consequence of the movement of the slider (24) from an open position to a closed position.

2. Apparatus according to claim 1, characterised in that each of said dies (22, 40) is provided with a respective slider (24, 42) movable in a direction orthogonal to said closure direction (B).

3. Apparatus according to claim 2, characterised in that said sliders (24, 42) are provided with respective cutting means (34, 56) for cutting surplus portions of said sheets (S', S'').

4. A method for manufacturing a component formed by two sheets (S', S'') of thermoplastic material by means of a moulding equipment including a first die (22), a second die (40) movable with respective to the first die (22) along a closure direction (B) and at least one slider (24) movable with respect to one of said dies (22, 40) along a direction (A) orthogonal to said closure direction (B), the method being characterised in that it comprises the steps of:
- placing the first sheet (S') heated at a plasticizing temperature on the slider (24) when this is spaced apart from the respective die,
- approaching the slider (24) to the respective die (22) and carrying out a compression moulding of a portion (12) of the fist sheet (S') compressed between two co-operating moulding surfaces (26, 28) of the slider (24) and of the corresponding lower die (22),
- placing a second sheet (S'') above the first sheet (S'),
- closing the second die (40) on the first die (22) and on the slider (24) and injecting a jet of pressurized fluid at high pressure between the sheets (S' and S'').
